# EUROPEAN PATENT SPECIFICATION

(11) **EP 1 488 570 B1**
(45) Date of publication and mention of the grant of the patent: **08.01.2014**
(21) Application number: 02790328.5
(22) Date of filing: 01.11.2002
(51) Int. Cl.: H04L 12/12, H04L 12/40

(54) **Remote switching of a communication device in a communication network**
Fernschaltung eines Kommunikationgerätes in einem Kommunikationnetzwerk
Commutation distante d'un dispositif de télécommunication dans un réseau de télécommunication

(30) Priority: 22.03.2002 GB 0206737
(43) Date of publication of application: 22.12.2004
(73) Proprietor: Freescale Semiconductor Inc., Austin, TX 78735 (US)
(72) Inventor: TEMPLE, Christopher,, 81825 München (DE); RAUSCH, Mathias, Motorola GmbH, 81829 Meunchen (DE)
(74) Representative: Ferro, Frodo Nunes
(86) International application number: PCT/EP2002/012276
(87) International publication number: WO 2003/081841

(56) References cited:
- US-A- 4 903 016
- US-B1- 6 263 388

## Description

### Field of the Invention

This invention relates to communication networks and particularly, though not exclusively, to embedded, fault-tolerant, dependable, distributed computer systems.

### Background of the Invention

In a distributed physical real-time system based on shared communication media, such as a broadcast bus or star topology, it is important to prevent a single faulty node from monopolizing the communication media. Since it cannot be assumed that a faulty node obeys the system's media arbitration policy, but that it will rather send messages at arbitrary points in time, it is necessary to protect the communication media against such uncontrolled node failures.

Two approaches are known for protecting shared communication media against uncontrolled node failures. Both approaches assume a regular, temporal deterministic media access scheme:
- A first approach proposes integrating a device, called bus guardian, with each node that controls the node's access to the communication media. The bus guardian is provided with *a priori* information about the transmission scheme of its associated node and enforces that access to the communication media is only given in accordance with the transmission scheme.
- A second approach is based on a star topology. It proposes integrating a distribution unit within the star coupler granting access of the respective nodes to the star according to a cyclical time slice method. Again the distribution unit, which is provided *a priori* before run-time with the transmission scheme of the connected nodes, imposes that at a given instant only one node is capable of transmitting to the remaining nodes according to the transmission scheme.

From US patent no. 4,015,246, titled "Synchronous Fault Tolerant Multi-Processor System", there is known a bus guardian for a non-distributed fully synchronous multiprocessing system based on very specific architectural assumptions (mininmum 3 buses, 6 processors).

From US patent no. 4,860,280, titled "Apparatus and Method for a sSecure and Diagnosable Antijabber Communication Circuit", it is known that in order to prevent 'jabber' (the uncontrolled transmission of messages on a communication channel) an anitjabber timing unit is frequently used to determine whether a message on the communication channel exceeds the maximum predetermined length of time.

From the publication of the Institut für Technische Informatik, Technische Universitat Wien, titled "Avoiding the Babbling-Idiot Failure in a Time-Triggered Communication System", it is known to use a bus guardian

From the publication of the Institut für Technische Informatik, Technische Universitat Wien, titled "Avoiding the Babbling-Idiot Failure in a Time-Triggered Communication System", it is known to use a bus guardian added to each node to protect a communication bus from babbling-idiot failure by exploiting the regular transmission poattern of a time-triggered system in order to enforce fail-silent behaviour of the node in the time domain.

From patent publication WO 0113230 A1, 2001, titled "Method for Imposing the Fail-Silent Characteristic in a Distributed Computer System and Distribution Unit in such a System", it is known to use a server-interconnecting distribution unit which knows *a priori* the servers' regular transmission pattern and imposes that a server is only able to transmit to remaining servers within a statically allocated time slice.

From US patent no. 5,355,375, titled "Hub Controller for Providing Deterministic Access to CSMA Local Area Network", it is known to alter a basic non-deterministic contention algorithm of the CSMA/CD protocol LAN within a hub controller to inhibit any CSMA/CD transmissions by a port, allowing the hub controller to control which of the multiple ports will be allowed to contend for access to a common internal bus within the hub controller and for how long.

From US patent 6,236,388, titled "Data processing system and method for remotely disabling network activity in a client computer system", it is known to permit a server computer system to remotely disable an ability of a client computer system to access a network which couples the client computer system to the server computer system. The client computer system comprises a network adaptor with a MAC and a physical layer. The server computer system transmits an indication to the client computer system utilizing the network that the ability of the client computer system to access said network be at least temporarily disabled. In response to a receipt of the indication by the client computer system, the ability of the client computer system to access the network is at least temporarily disabled by disabling the MAC or the physical layer, depending on the type of indication in response to suitable commands from the server system. The client computer system is unable to transmit information utilizing the network while the client computer system is temporarily disabled.

It will be understood that these known techniques fall into one of the two approaches summarized above.

However, both approaches suffer from drawbacks:
- The first approach suffers as it relies on functional independence between the node and its associated bus guardian in the event of a fault, since perceivable faults may cause not only the node but also its associated bus guardian to fail in an uncontrolled way. Due to the physical proximity of the two units this independency cannot always be convincingly ensured.
- The second approach suffers from use of a star coupler. In many environments it is not feasible to run a communication channel from every node to the star coupler for economical reasons. In addition, the star coupler represents a single point of failure in the system that has a higher probability of failure compared to a passive component such as a bus as it contains a significant number of active components, such as, for example, a microcontroller.

A need therefore exists for a communication network and arrangement for use therein wherein the abovementioned disadvantage(s) may be alleviated.

### Statement of Invention

In accordance with a first aspect of the present invention there is provided a communication network as claimed in claim 1.

In accordance with a second aspect of the present invention there is provided an arrangement for use in a communication network as claimed in claim 7.

In accordance with a third aspect of the present invention there is provided an integrated circuit as claimed in claim 13.

In brief, the invention proposes introducing an arrangement or component into a network, such as a distributed system, the component operating as a "communication diode". This component is placed at strategic positions within the communication network, where it serves as a firewall for uncontrolled node failures. This allows the enforcement of fail-silence in the time domain within a distributed computer systems showing resilience against spatial proximity faults.

### Brief Description of the Drawings

One communication network and arrangement for use therein incorporating the present invention will now be described, by way of example only, with reference to the accompanying drawing(s), in which:
FIG. 1 shows a schematic block-diagram illustrating a known guard device located within and controlled by a processing node in a prior art communication network;
FIG. 2 shows a schematic block-diagram illustrating a known guard device located within and controlled by a central distribution unit in a prior art communication network; three communication diodes, as shown in FIG. 3, incorporating the invention; and
FIG. 5 shows a schematic block-diagram illustrating a communication network containing three nodes and three communication diodes, as shown in FIG. 3, incorporating the invention.

### Description of Preferred Embodiment

In brief, the invention in one aspect introduces an arrangement or component into a distributed system that operates as a "communication diode". This component is placed at one or more strategic positions within the communication network, where it serves as a firewall for uncontrolled node failures.

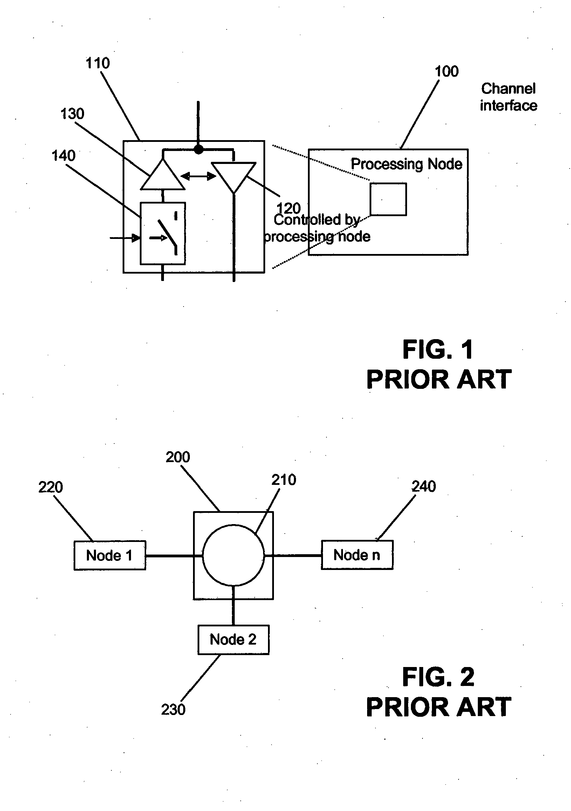

FIG. 1 shows a first, known prior art approach in which each node 100 includes a device 110, typically termed a bus guardian, that controls the node's access to the communication media. The bus guardian 110 contains input and output amplifiers 120 and 130; the bus guardian 110 also contains a switch 140, controlled by the processing node, which enables or disables the node for outputting signals to a channel interface (and thereby onto the communication media). The bus guardian 110 is provided with *a priori* information about the transmission scheme of its associated node and enforces that access to the communication media is only given in accordance with the transmission scheme.

It will be appreciated that the approach illustrated in FIG. 1 suffers as it relies on functional independence between the node and its associated bus guardian in the event of a fault, since perceivable faults may cause not only the node but also its associated bus guardian to fail in an uncontrolled way, and due to the physical proximity of the two units this independency cannot always be convincingly ensured.

FIG. 2 shows a second known, prior art approach which is based on a star topology. A star coupler 200 has integrated within it a distribution unit 210 which grants access of the respective nodes 1-n (of which only three, node 220, node 230 and node 240 are shown) to the star coupler 200 according to a cyclical time slice method. Similarly to the approach of FIG. 1 discussed above, the distribution unit 210 is provided *a priori* before run-time with the transmission scheme of the connected nodes, and imposes that at a given instant only one node is capable of transmitting to the remaining nodes according to the transmission scheme.

It will be appreciated that the approach illustrated in FIG. 2 suffers from use of a star coupler. In many environments it is not feasible to run a communication channel from every node to the star coupler for economical reasons. In addition, the star coupler represents a single point of failure in the system that has a higher probability of failure compared to a passive component such as a bus since it contains a significant number of active components, such as, for example, a microcontroller.

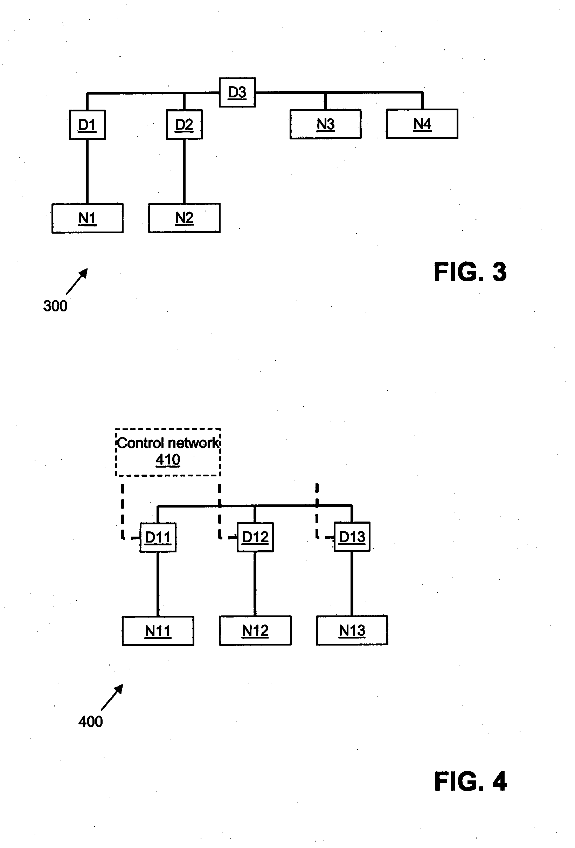

Referring now to FIG. 3, a network 300 incorporating the present invention contains four nodes N1-N4 and three components D1-D3, termed 'communication diodes', which will be explained in more detail below. The communication diode D1 is connected between the node N1 and the communication medium; the communication diode D2 is connected between the node N1 and the communication medium; and the communication diode D3 is connected between the node N3 & N4 and the communication medium. As will be explained in greater detail below, the communication diodes D1-D3 are controlled to enable/disable their respective nodes from accessing the communication medium.

A key virtue of the invention is its versatility: the communication diode can be deployed in a multitude of ways - it can not only be used to protect a shared communication media like a bus or a star from a node (illustrated in FIG. 3 with D1 and D2) but it can also protect subnets from subnets (illustrated with D3). It is also possible to use the communication diode to physically move the node from the bus connection as shown for node N1 and node N2. In addition it is possible to operate the diodes in a unidirectional or bi-directional way.

FIG. 4 shows a communication network 400 where a separate disjoint control network 410 interconnects three nodes N11-N13, which are coupled to communication medium 420 by respective communication diodes D11-D13.

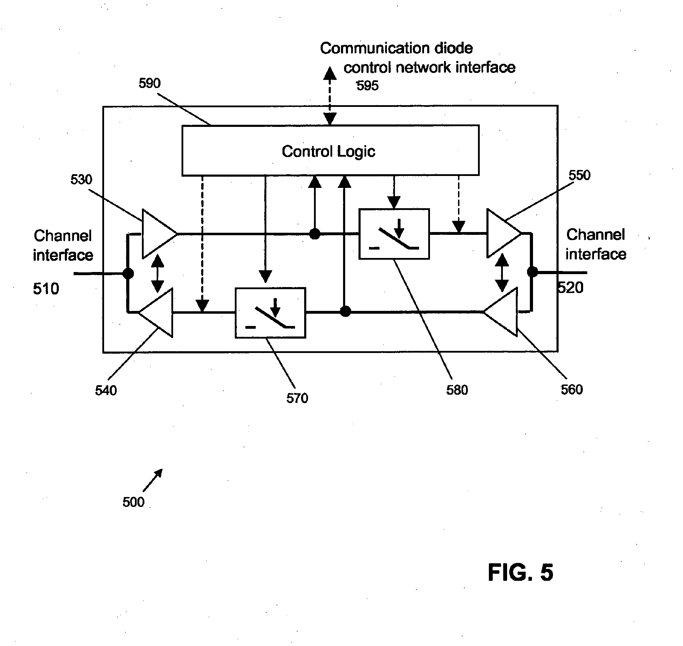

FIG. 5 illustrates the structure of a communication diode, which may be used as the communication diodes D1-D3 and D11-D13. The communication diode 500 has two communication channel interfaces 510 & 520 (having interface amplifiers 530, 540, 550 & 560), switches 570 & 580 and control logic 590. The control logic 590 contains the rule base used to control the switches. The rules may range from a pure time-access pattern to more sophisticated rules that consider and/or are controlled by packets that are picked up by the communication diode at an interface 595. Optional connections (dashed lines) indicate that it is also possible to have the communication diode communicate with other devices, for example, for maintenance purposes. The optional interface from the control logic can be used, for example, to connect the communication diode to a separate control network (not shown).

It will be understood that the networks 300 and 400 provide a dependable communication in the event of node error/failure by enforcing fail-silence of the node in the time domain. It will be understood that these networks provide isolation of a faulty processing node and/or subnets within an embedded distributed real-time communication system such as, for example, in automotive by-wire applications ('FlexRay', 'Time-Triggered Protocol' -TTP) under consideration of spatial proximity faults.

In summary, it will be appreciated that the networks 300 and 400 provide:
- spatial separation between processing node and guards
- they may be placed within the network line (allowing eavesdropping)
- they require no control signals from processing nodes (since they are controlled by a separate control network among guards)
- they may be controlled not only by time but also by commands embedded in frames.

It will further be understood that the communication diode 500 may conveniently be fabricated in integrated circuit form (not shown), and may be inserted as desired at one or more points in a network to provide the advantageous functionality described above.

## Claims

1. A communication network (300, 400) comprising:
a plurality of nodes;
a communication medium for communicating between the plurality of nodes; and
communication diode means (500) to controlledly enable/disable access of at least one of the plurality of nodes to the communication medium by control means, the diode means being external to the at least one of the plurality of nodes, such that isolation of a faulty node and/or subnets within the communication network can be achieved, the communication diode means (500) comprising: channel interface means for interfacing between the diode means (500) and a communication channel, and switch means (570, 580) for enabling/disabling signals on the channel; wherein the switch means comprises:
first direction switch means for selectively enabling/disabling signals in a first direction on the channel; and
second direction switch means for selectively enabling/disabling signals in a second direction on the channel opposite the first direction.

2. The communication network (300, 400) as claimed in claim 1, wherein the communication diode means (500) is arranged to be controlled by time-based control signals from an external control network.

3. The communication network (300, 400) as claimed in claim 1, wherein the communication diode means (500) is arranged to be controlled by frame-based control signals from an external control network.

4. The communication network (300, 400) as claimed in any preceding claim, wherein the network (300, 400) comprises a distributed computer system.

5. The communication network as claimed in any preceding claim, wherein the network is arranged for real-time communication.

6. The communication network (300, 400) as claimed in any preceding claim, wherein the network is arranged for use in an automotive application.

7. An arrangement for a communication network as claimed in any one of claims 1-6, the arrangement comprising:
communication diode means (500) to controlledly enable/disable access of at least one of the plurality of nodes to the communication medium by control means, the communication diode means being external to the at least one of the plurality of nodes, such that isolation of a faulty node and/or subnets within the communication network (300, 400) can be achieved, the communication diode means (500) comprising:
channel interface means for interfacing between the diode means and a communication channel, and switch means (570, 580) for enabling/disabling signals on the channel; wherein the switch means comprises:
first direction switch means for selectively enabling/disabling signals in a first direction on the channel; and
second direction switch means for selectively enabling/disabling signals in a second direction on the channel opposite the first direction..

8. The arrangement as claimed in claim 7, wherein the communication diode means (500) is arranged to be controlled by time-based control signals from an external control network.

9. The arrangement as claimed in claim 7, wherein the communication diode means (500) is arranged to be controlled by frame-based control signals from an external control network.

10. The arrangement as claimed in any one of claims 7-9, wherein the network (300, 400) comprises a distributed computer system.

11. The arrangement of any one of claims 7-10, wherein the network (300, 400) is arranged for real-time communication.

12. The arrangement of any one of claims 7-11, wherein the network (300, 400) is arranged for use in an automotive application.

13. An integrated circuit comprising the arrangement of any one of claims 7-12.

## Patentansprüche

1. Kommunikationsnetzwerk (300, 400), das umfasst:
eine Mehrzahl von Knoten;
ein Kommunikationsmedium zum Kommunizieren zwischen der Mehrzahl von Knoten; und
Kommunikationsdiodenmittel (500), um einen Zugriff mindestens eines von der Mehrzahl der Knoten auf das Kommunikationsmedium durch Steuermittel geregelt freizugeben/zu sperren, wobei die Diodenmittel extern zu dem mindestens einen von der Mehrzahl von Knoten angeordnet sind, so dass eine Isolation eines fehlerhaften Knotens und/oder Teilnetzes in dem Kommunikationsnetzwerk erreicht werden kann, wobei die Kommunikationsdiodenmittel (500) umfassen: Kanalschnittstellenmittel zum Koppeln zwischen den Diodenmitteln (500) und einem Kommunikationskanal und Schaltmittel (570, 580) zum Freigeben/Sperren von Signalen auf dem Kanal; wobei die Schaltmittel umfassen:
erste Richtungsschaltmittel zum selektiven Freigeben/Sperren von Signalen in eine erste Richtung auf dem Kanal; und
zweite Richtungsschaltmittel zum selektiven Freigeben/Sperren von Signalen in eine zweite Richtung auf dem Kanal entgegengesetzt zu der ersten Richtung.

2. Kommunikationsnetzwerk (300, 400) gemäß Anspruch 1, wobei die Kommunikationsdiodenmittel (500) angeordnet sind, um durch zeitbasierte Steuersignale von einem externen Steuernetzwerk gesteuert zu werden.

3. Kommunikationsnetzwerk (300, 400) gemäß Anspruch 1, wobei die Kommunikationsdiodenmittel (500) angeordnet sind, um durch rahmenbasierte Steuersignale von einem externen Steuernetzwerk gesteuert zu werden.

4. Kommunikationsnetzwerk (300, 400) gemäß einem der vorangehenden Ansprüche, wobei das Netzwerk (300, 400) ein verteiltes Computersystem umfasst.

5. Kommunikationsnetzwerk gemäß einem der vorangehenden Ansprüche, wobei das Netzwerk für eine Echtzeitkommunikation angeordnet ist.

6. Kommunikationsnetzwerk (300, 400) gemäß einem der vorangehenden Ansprüche, wobei das Netzwerk für eine Verwendung in einer Automobilanwendung angeordnet ist.

7. Anordnung für ein Kommunikationsnetzwerk gemäß einem der Ansprüche 1 - 6, wobei die Anordnung umfasst:
Kommunikationsdiodenmittel (500), um einen Zugriff mindestens eines von der Mehrzahl der Knoten auf das Kommunikationsmedium durch Steuermittel geregelt freizugeben/zu sperren, wobei die Kommunikationsdiodenmittel extern zu dem mindestens einen von der Mehrzahl von Knoten angeordnet sind, so dass eine Isolation eines fehlerhaften Knotens und/oder Teilnetzes in dem Kommunikationsnetzwerk (300, 400) erreicht werden kann, wobei die Kommunikationsdiodenmittel (500) umfassen: Kanalschnittstellenmittel zum Koppeln zwischen den Diodenmitteln und einem Kommunikationskanal und Schaltmittel (570, 580) zum Freigeben/Sperren von Signalen auf dem Kanal; wobei die Schaltmittel umfassen:
erste Richtungsschaltmittel zum selektiven Freigeben/Sperren von Signalen in eine erste Richtung auf dem Kanal; und
zweite Richtungsschaltmittel zum selektiven Freigeben/Sperren von Signalen in eine zweite Richtung auf dem Kanal entgegengesetzt zu der ersten Richtung.

8. Anordnung gemäß Anspruch 7, wobei die Kommunikationsdiodenmittel (500) angeordnet sind, um durch zeitbasierte Steuersignale von einem externen Steuernetzwerk gesteuert zu werden.

9. Anordnung gemäß Anspruch 7, wobei die Kommunikationsdiodenmittel (500) angeordnet sind, um durch rahmenbasierte Steuersignale von einem externen Steuernetzwerk gesteuert zu werden.

10. Anordnung gemäß einem der Ansprüche 7 - 9, wobei das Netzwerk (300, 400) ein verteiltes Computersystem umfasst.

11. Anordnung gemäß einem der Ansprüche 7 - 10, wobei das Netzwerk (300, 400) für eine Echtzeitkommunikation angeordnet ist.

12. Anordnung gemäß einem der Ansprüche 7 - 11, wobei das Netzwerk (300, 400) für eine Verwendung in einer Automobilanwendung angeordnet ist.

13. Integrierte Schaltung, die die Anordnung gemäß einem der Ansprüche 7 - 12 umfasst.

## Revendications

1. Réseau de communication (300, 400) comprenant :
une pluralité de noeuds ;
un support de communication destiné à assurer une communication entre la pluralité de noeuds ; et
des moyens de diodes de communication (500) destinés à activer/désactiver de manière contrôlée l'accès d'au moins l'un de la pluralité de noeuds au support de communication sous l'action de moyens de commande, les moyens de diodes étant externes à celui qui est au moins l'un de la pluralité de noeuds, de telle manière que l'isolement d'un noeud défaillant et/ou de sous-réseaux défaillants à l'intérieur du réseau de communication peut être réalisé, les moyens de diodes de communication (500) comprenant : des moyens d'interface de canal pour réaliser une interface entre les moyens de diodes (500) et un canal de communication, et des moyens de commutation (570, 580) destinés à activer/désactiver des signaux sur le canal ; les moyens de commutation comprenant :
des premiers moyens de commutation de direction destinés à activer/désactiver de manière sélective des signaux dans une première direction sur le canal ; et
des deuxièmes moyens de commutation de direction destinés à activer/désactiver de manière sélective des signaux dans une deuxième direction sur le canal, opposée à la première direction.

2. Réseau de communication (300, 400) tel que revendiqué dans la revendication 1, dans lequel les moyens de diodes de communication (500) sont organisés pour être commandés par des signaux de commande en fonction du temps, qui proviennent d'un réseau de commande externe.

3. Réseau de communication (300, 400) tel que revendiqué dans la revendication 1, dans lequel les moyens de diodes de communication (500) sont organisés pour être commandés par des signaux de commande en fonction de trames, qui proviennent d'un réseau de commande externe.

4. Réseau de communication (300, 400) tel que revendiqué dans une quelconque revendication précédente, dans lequel le réseau (300, 400) comprend un système informatique réparti.

5. Réseau de communication tel que revendiqué dans une quelconque revendication précédente, dans lequel le réseau est organisé pour une communication en temps réel.

6. Réseau de communication (300, 400) tel que revendiqué dans une quelconque revendication précédente, dans lequel le réseau est organisé pour une utilisation dans une application dans le domaine automobile.

7. Arrangement pour un réseau de communication tel que revendiqué dans l'une quelconque des revendications 1 à 6, l'arrangement comprenant :
des moyens de diodes de communication (500) destinés à activer/désactiver de manière contrôlée l'accès d'au moins l'un de la pluralité de noeuds au support de communication sous l'action de moyens de commande, les moyens de diodes de communication étant externes à celui qui est au moins l'un de la pluralité de noeuds, de telle manière que l'isolement d'un noeud défaillant et/ou de sous-réseaux défaillants dans le réseau de communication (300, 400) peut être réalisé, les moyens de diodes de communication (500) comprenant : des moyens d'interface de canal pour réaliser une interface entre les moyens de diodes et un canal de communication, et des moyens de commutation (570, 580) destinés à activer/désactiver des signaux sur le canal ; les moyens de commutation comprenant :
des premiers moyens de commutation de direction destinés à activer/désactiver de manière sélective des signaux dans une première direction sur le canal ; et
des deuxièmes moyens de commutation de direction destinés à activer/désactiver de manière sélective des signaux dans une deuxième direction sur le canal, opposée à la première direction.

8. Arrangement tel que revendiqué dans la revendication 7, dans lequel les moyens de diodes de communication (500) sont organisés pour être commandés par des signaux de commande en fonction du temps, qui proviennent d'un réseau de commande externe.

9. Arrangement tel que revendiqué dans la revendication 7, dans lequel les moyens de diodes de communication (500) sont organisés pour être commandés par des signaux de commande en fonction de trames, qui proviennent d'un réseau de commande externe.

10. Arrangement tel que revendiqué dans l'une quelconque des revendications 7 à 9, dans lequel le réseau (300, 400) comprend un système informatique réparti.

11. Arrangement tel que revendiqué dans l'une quelconque des revendications 7 à 10, dans lequel le réseau (300, 400) est organisé pour une communication en temps réel.

12. Arrangement tel que revendiqué dans l'une quelconque des revendications 7 à 11, dans lequel le réseau (300, 400) est organisé pour une utilisation dans une application dans le domaine automobile.

13. Circuit intégré comprenant l'arrangement selon l'une quelconque des revendications 7 à 12.
